Europäisches Patentamt

European Patent Office

Office européen des brevets

(11) Numéro de publication: **0 298 816**
A1

## (12) DEMANDE DE BREVET EUROPEEN

(21) Numéro de dépôt: 88401576.9

(22) Date de dépôt: 22.06.88

(51) Int. Cl.⁴: **G 05 D 16/12**
G 05 D 16/06, G 21 F 7/04

(30) Priorité: 25.06.87 FR 8708949

(43) Date de publication de la demande:
11.01.89 Bulletin 89/02

(84) Etats contractants désignés:
BE CH DE GB IT LI

(71) Demandeur: COMMISSARIAT A L'ENERGIE ATOMIQUE
31/33, rue de la Fédération
F-75015 Paris (FR)

(72) Inventeur: Couleaud, Jean
Rue du Docteur Babin 53 Cité Georges Lanson Bt F
F-91220 Bretigny sur Orge (FR)

Galan, Claude
5, Avenue Georges Clémenceau
F-94480 Ablon sur Seine (FR)

(74) Mandataire: Mongrédien, André et al
c/o BREVATOME 25, rue de Ponthieu
F-75008 Paris (FR)

(54) Dispositif à plusieurs pistons de régulation de la pression dans une enceinte.

(57) Il comprend un corps (12) présentant un raccord d'admission (14) destiné à être relié à ladite enceinte (2), un raccord d'extraction (16) destiné à être relié à un circuit d'extraction (8, 18), un orifice (34) d'admission d'une pression de référence. A l'intérieur du corps (12), un bloc cylindre (22) délimite avec le corps (12) un collecteur d'admission (40), un collecteur d'extraction (42) et un collecteur de pression de référence (44). respectivement. Une pluralité de cylindres (P) est prévue dans le bloc cylindre (22). Chaque cylindre (P) communique par un orifice latéral (46) avec le collecteur d'extraction (42). Les pistons (P) sont aptes à dégager au moins partiellement les orifices latéraux (46) communiquant avec le collecteur d'extraction.

FIG. 1

EP 0 298 816 A1

**Description**

## DISPOSITIF A PLUSIEURS PISTONS DE REGULATION DE LA PRESSION DANS UNE ENCEINTE

La présente invention concerne un dispositif à plusieurs pistons de régulation de la pression dans une enceinte.

Les boîtes à gants sont des enceintes étanches à l'intérieur desquelles on peut manipuler des produits dangereux, notamment des produits radioactifs. Ces enceintes doivent être maintenues en permanence en dépression par rapport à la pression extérieure afin d'éviter toute fuite de matière radioactive vers l'extérieur en cas de rupture du confinement de l'enceinte.

On connaît déjà des dispositifs permettant de réguler la pression à l'intérieur d'une enceinte en dépression telle qu'une boîte à gants pour maintenir en permanence cette pression entre un seuil supérieur et un seuil inférieur. De manière classique, ces dispositifs utilisent des électrovannes, situées en amont et en aval de l'enceinte, dont le contrôle est assuré par un dispositif électrique de commande et des manomètres. Ces dispositifs présentent l'inconvénient d'allonger le temps de réponse à une montée en pression par suite des intermédiaires qui interviennent dans la commande de l'électrovanne. De plus, de tels dispositifs sont complexes et coûteux.

On connaît également (demande de brevet français n°8414684 du 24 septembre 1984) un dispositif de surveillance de la pression dans une enceinte constitué par un corps principal présentant une ouverture latérale et à l'intérieur duquel coulisse un piston lesté dont le déplacement en translation dégage au moins partiellement l'ouverture latérale. Ce dispositif permet de réguler la dépression à l'intérieur d'une enceinte de manière simple et avec un temps de réponse très bref.

Toutefois, avec ce dispositif, le débit maximum pouvant être extrait de l'enceinte en dépression est limité. En effet, la soupape ne s'ouvre jamais complètement, de telle sorte que la section de passage disponible pour l'aspiration du gaz ne peut dépasser une fraction seulement de la section de passage du passage latéral. On pourrait certes songer à augmenter le diamètre de la soupape ainsi que le diamètre de l'ouverture latérale afin d'augmenter le débit maximum. Une telle augmentation de diamètre ne résout que partiellement le problème.

La présente invention a précisément pour objet un dispositif de régulation de la pression à l'intérieur d'une enceinte permettant de remédier aux inconvénients énumérés ci-dessus.

De manière plus précise, l'invention concerne un dispositif de régulation de la pression régnant dans une enceinte comprenant un corps présentant un raccord d'admission destiné à être relié à ladite enceinte, un raccord d'extraction destiné à être relié à un circuit d'extraction, un orifice d'admission d'une pression de référence, caractérisé en ce qu'il comporte, à l'intérieur du corps, un bloc cylindre délimitant avec le corps un collecteur d'admission, un collecteur d'extraction et un collecteur de pression de référence, respectivement, une pluralité de cylindres étant prévus dans ledit bloc cylindre, chaque cylindre communiquant par un orifice latéral avec le collecteur d'extraction, lesdits pistons étant aptes à dégager au moins partiellement lesdits orifices latéraux communiquant avec le collecteur d'extraction.

De préférence, lesdits pistons sont lestés à des valeurs différentes afin d'étager la réponse en pression.

D'autres caractéristiques et avantages de l'invention apparaîtront encore à la lecture de la description qui suit d'un exemple de réalisation donné à titre illustratif et nullement limitatif, en référence aux figures annexées, sur lesquelles :

- la figure 1 est une vue schématique d'un système de régulation de pression d'une enceinte en dépression comportant un dispositif conforme à l'invention ;

- les figures 2 et 3 sont des vues en coupe à échelle agrandie du dispositif de régulation de pression conforme à l'invention représentée sur la figure 1, la figure 2 étant une vue en coupe selon la ligne II-II de la figure 3 et la figure 3 une vue en coupe selon la ligne III-II de la figure 2,

- la figure 4 est une courbe représentant la variation du débit en fonction de la dépression dans le cas d'un système conforme à l'invention.

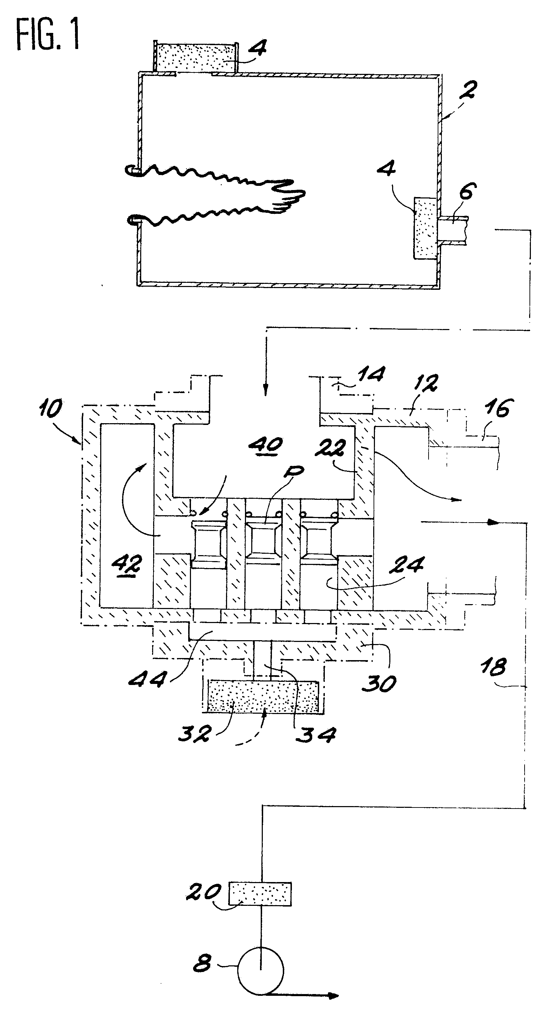

On a représenté sur la figure 1 une boîte à gants 2 munie d'un système de régulation de pression. L'air extérieur est aspiré dans la boîte à gants au travers d'un filtre 4 avant d'être évacué hors de cette boîte par une canalisation 6 communiquant avec une pompe d'extraction 8 par l'intermédiaire d'un système de régulation de pression conforme à l'invention, désigné dans son ensemble par la référence générale 10.

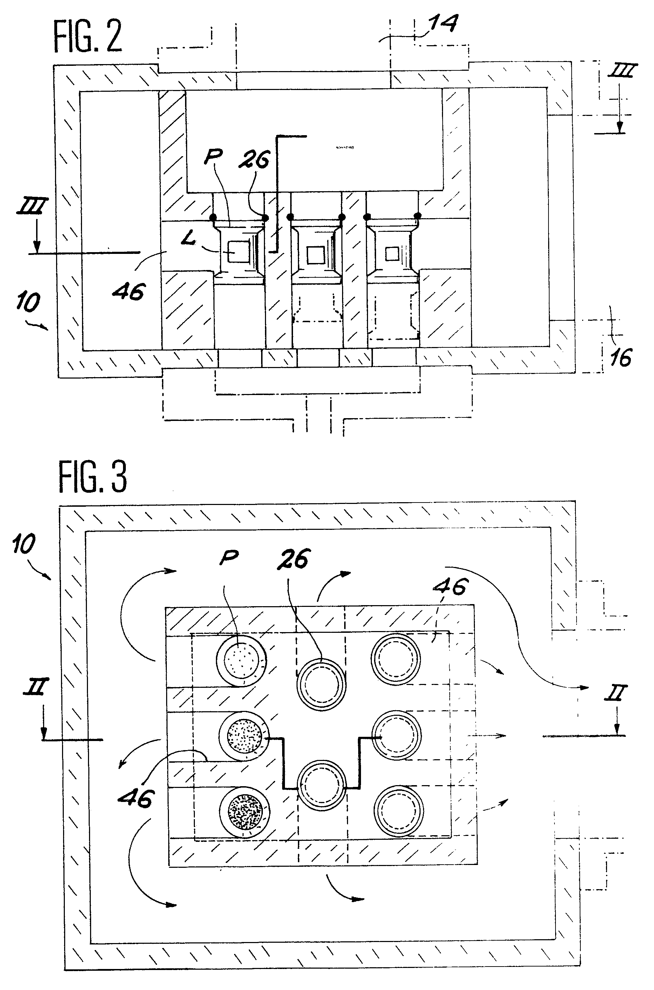

Comme on peut le voir sur la figure 1 et plus en détail sur les figures 2 et 3, le dispositif de régulation 10 est constitué d'un corps 12 comportant une bride 14 raccordée à la canalisation 6 qui débouche dans la boîte à gants 2. Une bride 16 reliée à une canalisation 18 est reliée à la pompe d'extraction 8 par l'intermédiaire d'un filtre 20.

Enfin, le corps 12 comporte un couvercle 30 sur lequel est monté un filtre 32. L'orifice central 34 prévu dans ce couvercle permet de mettre l'intérieur du corps 12 en communication avec une pression de référence, la pression atmosphérique dans l'exemple décrit. Toutefois, cette pression pourrait être différente éventuellement de la pression atmosphérique.

A l'intérieur de l'enveloppe 12, on trouve un bloc cylindre 22 comportant, dans l'exemple de réalisation décrit, huit cylindres, comme on peut le voir notamment sur la figure 3. Un piston P est monté coulissant à l'intérieur de chacun des cylindres 24. Une butée 26 limite le déplacement vers le haut de chacun des pistons P. Cette butée peut être constituée par exemple par un joint torique, ou un circlips. Par ailleurs, une butée 28 limite le déplacement de chacun des pistons P vers le bas. Chacun des pistons P comporte un lest L ajusté à une valeur convenable de manière que le piston flotte à l'intérieur de l'alésage 24. Les lests de chacun des pistons peuvent être égaux entre eux ou bien, selon une autre réalisation, les valeurs des lests peuvent être différentes et présenter des valeurs croissantes.

Le bloc cylindre délimite avec le corps 12 un collecteur d'admission 40 qui communique avec la canalisation 6 par la bride 14, un collecteur d'extraction 42 entourant le bloc cylindre 22 et relié à la pompe d'extraction par l'intermédiaire de la bride 16 et un collecteur de pression de référence 44 par lequel la pression de référence est transmise à l'extrémité inférieure, de chacun des cylindres 24. En outre, chacun de ces cylindres communique par un orifice latéral 46 (voir figure 3) avec le collecteur d'extraction 42.

Le fonctionnement de la présente soupape est le suivant :

En régime de fonctionnement nominal, chacun des pistons P dégage partiellement l'ouverture 46 par laquelle il communique avec le collecteur d'extraction 42. Ainsi, un débit d'extraction sensiblement constant s'établit à travers la boîte à gants 2.

Si la pression à l'intérieur de la boîte à gants augmente, pour une raison quelconque, cette augmentation de pression est communiquée au collecteur d'admission 40 et par suite à la face supérieure de chacun des pistons P. La pression de référence s'exerçant sur la face intérieure de ces pistons étant constante, l'augmentation de pression sur la face supérieure des pistons les repousse vers le bas, ce qui conduit à augmenter la section de passage de l'ouverture qui les met en communication avec le collecteur d'extraction 42. Par suite, le débit d'extraction est augmenté et la pression à l'intérieur de l'enceinte est ramenée à sa valeur nominale.

Si les pistons présentent des lests égaux, ils descendent tous d'une même valeur, de telle sorte que l'augmentation de section est identique pour chacun des passages 26. L'augmentation de section globale est ainsi égale à l'augmentation de section de passage d'un piston multipliée par le nombre de pistons, par exemple huit dans l'exemple décrit.

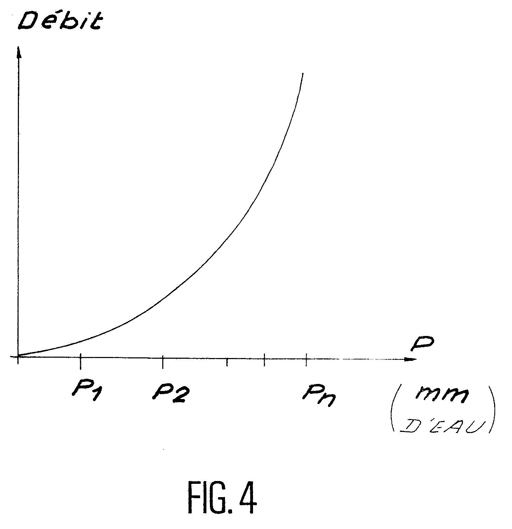

Selon une variante de réalisation, les pistons présentent des lests différents allant en augmentant. On peut ainsi obtenir une réponse progressive du dispositif de régulation en fonction de la différence D entre la pression régnant dans la boîte à gants 2, et la pression de référence comme représenté sur la figure 4. Pour une faible valeur de cette dépression relative, un seul piston est ouvert, à savoir celui qui est le plus lourdement lesté. Si la valeur entre la pression nominale admissible dans l'enceinte et la pression existant réellement augmente encore, un deuxième piston s'ouvre, à savoir celui qui présente le lest le plus important après le premier piston, et ainsi de suite jusqu'au piston le plus faiblement lesté.

**Revendications**

1. Dispositif de régulation de la pression régnant dans une enceinte (2) comprenant un corps (12) présentant un raccord d'admission (14) destiné à être relié à ladite enceinte (2), un raccord d'extraction (16) destiné à être relié à un circuit d'extraction (8, 18), un orifice (34) d'admission d'une pression de référence, caractérisé en ce qu'il comporte, à l'intérieur du corps (12), un bloc cylindre (22) délimitant avec le corps (12) un collecteur d'admission (40), un collecteur d'extraction (42) et un collecteur de pression de référence (44), respectivement, une pluralité de cylindres (P) étant prévus dans ledit bloc cylindre (22), chaque cylindre (P) communiquant par un orifice latéral (46) avec le collecteur d'extraction (42), lesdits pistons (P) étant aptes à dégager au moins partiellement lesdits orifices latéraux (46) communiquant avec le collecteur d'extraction.

2. Dispositif de régulation selon la revendication 1, caractérisé en ce que lesdits pistons (P) sont lestés à des valeurs différentes afin d'étager la réponse en pression.

FIG. 1

0298816

0298816

**FIG. 2**

14

III

III

P   26

L

46

10

16

**FIG. 3**

10

P   26   46

II

II

46

46

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | FR-A-2 570 846 (COMISSARIAT A L'ENERGIE ATOMIQUE) * abrégé; page 4, ligne 3 - page 6, ligne 5; page 2, lignes 6-21; figures 1, 2 * --- | 1,2 | G 05 D 16/12 G 05 D 16/06 G 21 F 7/04 |
| Y | DE-C- 448 051 (PINTSCH) * page 2, lignes 1-86; page 3, lignes 74-84; figures * --- | 1,2 | |
| Y | US-A-1 729 819 (CAMPBELL) * page 1, lignes 1-22; page 1, ligne 69 - page 2, ligne 76; revendications 1-3; figure 1 * --- | 1,2 | |
| A | DE-C- 227 165 (BURY) * en entier * ----- | 1,2 | |

| | | | DOMAINES TECHNIQUES RECHERCHES (Int. Cl.4) |
|---|---|---|---|
| | | | G 05 D 16/00 F 16 K 11/00 B 25 J 21/00 G 21 F 7/00 |

Le présent rapport a été établi pour toutes les revendications

| Lieu de la recherche | Date d'achèvement de la recherche | Examinateur |
|---|---|---|
| BERLIN | 17-10-1988 | BEITNER M.J.J.B. |